# EUROPEAN PATENT APPLICATION

(11) **EP 4 390 387 A1**
(43) Date of publication of application: **26.06.2024**
(21) Application number: 22884151.6
(22) Date of filing: 11.10.2022
(51) Int. Cl.: G01N 27/87

(54) **IN-LINE DEVICE FOR DETECTING MECHANICAL STRESSES IN A PIPELINE**

(30) Priority: 19.10.2021 RU 2021130370
(71) Applicant: Kolesnikov, Igor Sergeevich, Moscow, 105203 (RU)
(72) Inventor: Kolesnikov, Igor Sergeevich, Moscow, 105203 (RU)
(74) Representative: Benatov, Samuil Gabriel
(86) International application number: PCT/RU2022/050322
(87) International publication number: WO 2023/068968

(57) **Abstract**

The in-line device for determining mechanical stresses in pipelines is designed to move within the pipeline. The device features a cylindrical body that houses at least two coaxially positioned non-ferromagnetic disks. These disks are rigidly connected and arranged at a distance L. The device also includes at least four probes with 3D gradiometer sensors capable of scanning the inner pipe surface using the magnetic gradient tomography (MTM-G) method. The probes are rigidly fixed and coaxially positioned within the cylindrical body on the aforementioned disks, enabling scanning in three mutually perpendicular planes within the pipe space.

## Description

### Technical field:

The invention pertains to the field of measurement utilizing computational technologies and can be employed in industries that operate pipelines (oil and gas extraction, construction, energy, nuclear, utilities, metal structure diagnostics, environmental protection).

### Background:

During their operation, pipelines undergo various external loads including internal pressure, temperature fluctuations, external factors related to their installation conditions (soil movement, landslide effects, seismically unstable zones with cyclic loads, mountainous, swampy, offshore pipelines, etc.). Furthermore, under certain circumstances (including during the manufacturing and construction of the pipeline), as well as over time during operation with aging processes, certain local defects may appear in the metal wall, which in one way or another reduce the load-bearing capacity of pipelines, developing longitudinally, transversely or in any combination of directions depending on the force configuration. The following primary types of mechanical stresses may occur: hoop stresses, longitudinal stresses, bending stresses, torsional stresses, shear stresses, or combinations thereof.

Hoop stresses in a pipe wall arise from internal pressure of the transported medium, and-in the absence of potential inhomogeneities and defects-such stresses remain constant around the circumference of the pipe section in question. In case of a defect or inhomogeneities, an uneven distribution of hoop stresses will be observed in the area of this inhomogeneity, and this anisotropy will be caused by local stress concentration.

Longitudinal stresses consist of stresses caused by: 1) internal pressure of the medium (calculated as a portion of the hoop stresses); 2) potential temperature deformations; 3) bending, which can be caused by the curvature of the route during pipeline installation (for example, trench curvature) or possible external impacts and/or changes in the pipeline position beyond design (for example, due to its surfacing, movement as a result of landslide processes, etc.). Therefore, the practical priority in determining the stress state of pipelines is to ascertain the degree of concentration of mechanical stresses inside the pipeline under real load conditions.

At present, there are numerous solutions that facilitate the detection of mechanical stresses in pipelines. THE method for in-line diagnostics of the technical condition of a pipeline described in RU 2697008 C1 is known. This solution involves moving a device inside the pipeline between inspection hatches under the pressure of the fluid transported across the pipeline. The device is a detachable spherical body with magnetic field, temperature, pressure and acoustic sensors, accelerometers and a data recorder for measurements taken by said sensors. The device includes a power source and a clock frequency generator. The acoustic emission sensors are designed to receive emission signals in both sonic and supersonic frequency ranges. At least fourteen single-component permanent magnetic field sensors are used as magnetic field sensors: they are placed evenly and symmetrically on the inner surface of the body to ensure a high degree of mutual alignment. Before measurement, the device undergoes iterative high-precision calibration to ensure the alignment of the symmetrical single-component sensors. At least 14 components of magnetic induction of this field are measured at different points within the pipe space, from which at least seven gradients of magnetic induction of the pipe inner field are calculated. At least two parameters of the acoustic emission field and temperature of the thermal field and pressure of the transported fluid are measured at different points within the pipe space. Diagnostic parameters of the pipeline are calculated based on the data obtained.

However, this solution has certain drawbacks. Hoop and longitudinal mechanical stresses oriented perpendicularly are present at the same point on the pipeline surface. The single-component magnetic field sensor in said solution cannot ensure the measurement of the magnetic field in the space at this given point - it only measures the projection of the field in a given direction at a specific point. Moreover, according to the given solution, the device geometry is a sphere, with sensors placed on its surface. Despite the sensors being positioned symmetrically around the center, this system is unable to identify the type of mechanical stresses (such as hoop, longitudinal, axial, bending, torsion, shear, etc.) because the distribution of mechanical stresses within the pipeline itself is not symmetrical, and the methods for assessing pipeline hazards are not symmetrical in all directions.

### Disclosure of the invention:

The invention aims to eliminate the aforementioned shortcomings and create a solution that can determine the actual state of a pipeline operating under real load conditions.

The technical result in this case is an improvement in the accuracy of determining the concentration level of mechanical stresses within a pipeline under real load conditions.

To achieve this technical result, an in-line mechanical stress detection device is proposed. This device can move within the pipeline and includes: a cylindrical body containing at least two coaxially positioned non-ferromagnetic disks rigidly connected and spaced at a distance L from each other; at least four probes with 3D gradiometer sensors capable of scanning the inner pipe surface using the magnetic tomography method **(MTM-G).** These four probes are rigidly fixed and coaxially positioned within the cylindrical body on the aforementioned two coaxially positioned disks and ensure: a) scanning in three mutually perpendicular planes within the inner pipe space; b) automatic registration of magnetic field gradients; and c) transmission of mechanical pipeline stress measurement data to the mechanical stress determination controller in the form of recorded magnetic field gradients. The mechanical stress determination controller in the cylindrical body contains memory connected to the processor and is capable of receiving data from the aforementioned four probes for mechanical stress measurements in the pipeline and storing them in said memory.

Additionally, these four probes are capable of recording changes in the pipeline spatial position.

Furthermore, changes in the pipeline spatial position include at least one of the following: pipeline direction in space, pipeline installation depth, elevation differences in pipeline location, pipeline turns in space, changes in pipeline designed location, or combination thereof.

Additionally, these four probes are capable of detecting local defects in pipeline geometry changes.

Clearly, both the preceding general description and the following detailed description are merely illustrative and explanatory and do not limit this invention.

### Brief description of the drawings:

Fig. 1 is a graphical representation of possible distribution of the chosen characteristic parameter.
Fig. 2 is a schematic depiction of an in-line mechanical stress detection device in the pipeline.

### Embodiment:

As previously mentioned, the following primary types of mechanical stresses can occur within a pipeline: hoop stresses, longitudinal stresses, bending stresses, or a combination thereof. Each of these types of mechanical stresses can be defined as anisotropy in the distribution of corresponding average values of characteristic parameters. For instance, a characteristic parameter is chosen for a specific assessment (for example, for assessing hoop stresses, the criterion of modulus of anisotropy of field gradients in the secant plane of the pipeline can be chosen as such characteristic parameter). Through comparative analysis of the characteristic parameter distribution, any anisotropy in such distribution could indicate the presence of an anomaly (stress raiser); for this, a baseline is determined and an interval of five acceptable average background values of deviation from the baseline is chosen. The boundaries of distribution placed beyond the corridor value range determine the boundaries of the anomalies, and the degree of stress concentration can be determined as a relative measure of such deviations from the corridor of baseline values.

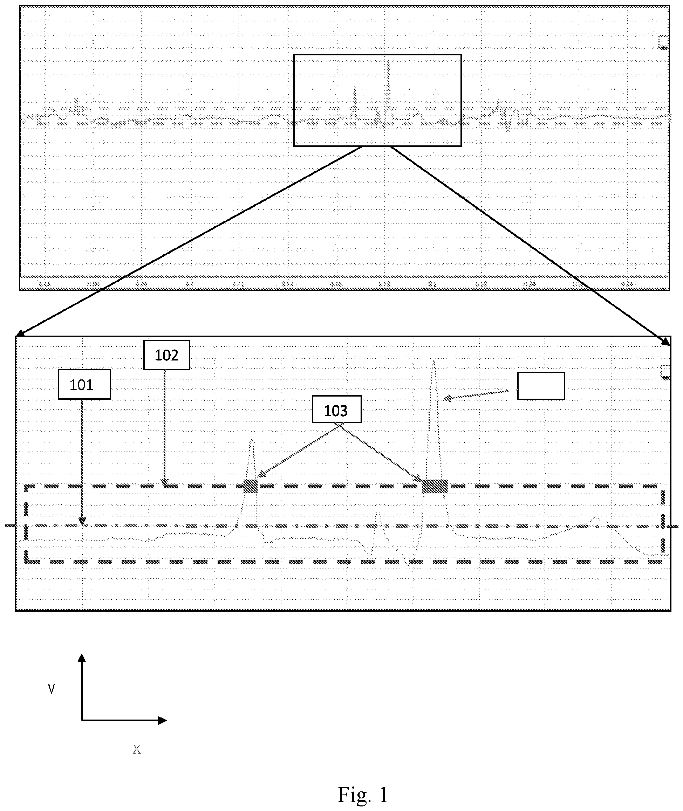

In line with the above, Fig. 1 shows a possible distribution of the selected characteristic parameter. In the Figure provided, position 101 indicates the baseline, position 102 indicates the baseline range, position 103 indicates stress raisers (anomalies), and position 104 indicates the characteristic parameter. The horizontal X-axis represents the longitudinal coordinate along the pipeline axis, while the vertical Y-axis represents the values of the characteristic parameter. To assess hoop stresses, the sensors of the gradiometer oriented pairwise in opposite directions are used. The sensors lie in a plane that intersects the pipeline axis. The gradiometer is capable of scanning the inner pipe surface using the magnetic gradient tomography method (also known as the MTM-G gradiometer). The characteristic parameter can be the gradient values collinear to the radial directions in a plane perpendicular to the pipeline axis. Composition and arrangement of said pairwise oriented sensors for assessing hoop stresses are determined by the pipeline diameter. The number of probes is dictated by the smallest available size of the carrier (for instance, an in-line pig), where a gradiometer can be installed, but at least four for the smallest diameter. Concentration of hoop stress can be identified as anisotropy in the distribution of gradients from the pairwise oriented probes. It is worth noting that in this solution, the carrier for these probes can be an in-line pig, a caliper pig that records changes in pipeline location in space, a diagnostic inspection device - UT/TFI (excluding MFL without a demagnetizing head due to high artificial magnetization after such inspection), and so on.

To assess longitudinal stresses, gradiometer probes pairwise and coaxially oriented along the pipeline axis are used. These probes are mounted at a fixed distance from each other in at least two rigidly connected planes.

To assess bending stresses (both vertical and horizontal), the presence of a bending moment can be identified as a gradient of probes coaxially and longitudinally oriented and located at the center of the pig.

Any other types of stresses and their combinations (torsion, complex stressed bending, shear) can be determined by separate solutions that are beyond the scope hereof and are specific embodiments of this invention.

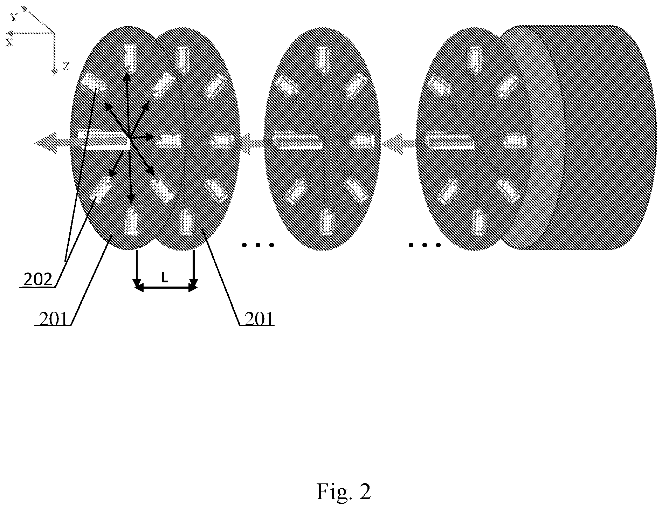

A schematic representation of device 200 for in-line determination of mechanical stresses in a pipeline is given in Fig. 2. Device 200 comprises a cylindrical body that contains at least two coaxially spaced disks 201 made of non-ferromagnetic materials, four probes 202 with 3D gradiometer sensors capable of scanning the inner pipe surface using magnetic gradient tomography (MTM-G), and a controller for determining mechanical stresses (not shown in the Figure) in the cylindrical body, which includes the memory (also not shown in the Figure) connected to the processor. The aforementioned controller is designed to receive data from said four probes 202 for measured mechanical stresses in the pipeline and store said data in the mentioned memory.

Disks 201 are rigidly connected and spaced at a distance L from each other. In the context of this solution, and as shown in Fig. 2, multiple disks 201 are positioned within the cylindrical body of the device. The number of said disks is determined by the specific design of the pipeline that needs to be scanned.

The aforementioned four probes 202 are rigidly fixed and coaxially oriented within the cylindrical body on the two coaxially spaced disks 201. Probes 202 a) scan in three mutually perpendicular planes within the pipe; b) register magnetic field gradients automatically; and c) transmit mechanical stress measurement data in the pipeline to the controller in the form of registered magnetic field gradients. Alternatively, the aforementioned four probes 202 can also record changes in the pipeline location in space. Based on this alternative, changes in the pipeline spatial position include at least one of the following: pipeline direction in space, pipeline installation depth, elevation differences in pipeline location, pipeline turns in space, changes in pipeline designed location, or combination thereof. As another alternative, the aforementioned four probes 202 can also register local defects in changes to the pipeline geometry (for example, out-of-roundness or dents in the pipeline).

As the in-line mechanical stress detection device moves within the pipeline, it automatically records magnetic field gradients and stores them in its internal memory.

Device 200 can operate in the following steps.

The initial step involves measuring the magnetic flux density using sensor arrays, which is done by sequential non-contact measurement of characteristic parameters along the pipeline axis. Magnetic field induction gradients dB which represent changes in magnetic flux density as the sensor array moves along the pipeline axis can be used as characteristic parameters. Non-contact magnetic flux density measurement includes non-contact magnetic flux density measurement in a YZ plane, non-contact magnetic flux density measurement in an XY plane, and non-contact magnetic flux density measurement in two XZ planes spaced apart from each other. The YZ plane represents the area of the pipeline transverse hoop stresses, the XY plane represents the area of longitudinal-horizontal stresses and bending moments of the pipeline, while the mentioned XZ planes represent the area of longitudinal-vertical stresses and bending moments. The aforementioned non-contact measurements can be conducted simultaneously in the YZ, XY, and two XZ planes. Once the non-contact measurement of magnetic flux density is completed, the process advances to the second step.

During the second step, the controller for determining mechanical stresses receives data on characteristic parameters in the form of magnetic field induction gradients dB, which represent changes in magnetic flux density. After receiving the aforementioned data, the process advances to the third step.

In the third step, the controller is used to calibrate the characteristic parameter data based on received data. This involves determining calibration coefficients from known data that represent the magnetomechanical state of a uniform pipeline throughout its length as a function of changes in magnetic flux density and mechanical moment. Calibration coefficients are determined as ratios between magnetic and mechanical moments. The aforementioned calibration is determined from conditions of known differences in magnetic moments in two different pipeline sections or known differences in mechanical moments relative to differences in internal pressure or temperature. After the aforementioned calibration, the process advances to the fourth step.

In the fourth step, the controller is used to calculate the distribution of mechanical stresses at each measured point along the entire length of the pipeline using matrix transformations. As a result of the matrix transformations, increments of the stress resultant are determined at each measured point. Transverse hoop, longitudinal-horizontal, and longitudinal-vertical stresses are calculated separately as projections of the stress resultant onto corresponding planes within the stress area. After the aforementioned calculation, the process advances to the fifth step.

In the fifth step, the controller is used to determine mechanical stresses in the pipeline based on the calculated distribution of mechanical stresses at each measured point along the entire pipeline length. Anomalies are identified based on the specified criteria for stress limit values. Magnitude of mechanical stress concentration is inferred from the maximum deviation from permissible mechanical stress values, and the nature of the anomaly source is inferred from the shape of the mechanical stress distribution. After this determination, the process advances to the sixth step.

The sixth step involves automatic storing the mechanical stresses of the characteristic parameters in the form of magnetic field induction gradients *dB,* determined calibration coefficients, and calculated distributions of mechanical stresses at each measured point throughout the pipeline in the database.

Although this invention has been demonstrated and described with reference to specific embodiments, those skilled in this field will understand that various changes and modifications can be made without departing from the actual scope of the invention.

## Claims

1. The in-line device for determining mechanical stresses in pipelines is designed to move within the pipeline and distinguished by its components:
- a cylindrical body that houses at least two coaxially positioned non-ferromagnetic disks rigidly connected and placed at a distance L;
- a minimum of four probes with 3D gradiometer sensors capable of scanning the inner pipe surface the using the magnetic gradient tomography (MTM-G) method, in which
the aforementioned four probes are rigidly fixed and coaxially oriented within the cylindrical body on the two coaxially spaced disks enabling the following:
a. Scanning in three mutually perpendicular planes within the pipe space;
b. Automatic recording of magnetic field gradients;
and
c. Transmitting the mechanical stress measurement data in the pipeline as the recorded magnetic field gradients to the mechanical stress determination controller;
- the mechanical stress determination controller in the cylindrical body with the memory linked to the processor capable of receiving mechanical stress measurement data in the pipeline from said four probes and storing it in the memory.

2. The device as per claim 1 **characterized by** the fact that the four probes are also capable of recording changes in the pipeline spatial position.

3. The device as per claim 2 **characterized by** the fact that changes in the pipeline spatial position include at least one of the following: pipeline direction in space, pipeline installation depth, elevation differences in pipeline location, pipeline turns in space, changes in pipeline designed location, or combination thereof.

4. The device as per claim 1 **characterized by** the fact that the four probes are also capable of recording local defects in the pipeline geometry.
